# FASCICULE DE BREVET EUROPEEN

(11) **EP 2 794 132 B1**
(45) Date de publication et mention de la délivrance du brevet: **18.11.2015**
(21) Numéro de dépôt: 12781389.7
(22) Date de dépôt: 12.10.2012
(51) Int. Cl.: B07C 3/00, B65H 31/06

(54) **DISPOSITIF DE CHARGEMENT/DÉCHARGEMENT AUTOMATIQUE POUR OBJETS PLATS EMPILÉS SUR CHANT, MACHINE DE TRI D'OBJETS PLATS, PROCÉDÉ DE DÉCHARGEMENT ET PROCÉDÉ DE TRI POSTAL**
AUTOMASISCHE BE- UND ENTLADEVORRICHTUNG FÜR FLACHE AUFRECHT GESTAPELTE FLACHE OBJEKTE, SORTIERMASCHINE FÜR FLACHE OBJEKTE, VERFAHREN ZUM AUTOMATISCHEN ENTLADEN UND POSTSORTIERVERFAHREN
AUTOMATIC LOADING/UNLOADING DEVICE FOR FLAT OBJECTS PILED ON EDGE, SORTING MACHINE FOR FLAT OBJECTS, METHOD FOR AUTOMATIC UNLOADING AND METHOD FOR POSTAL SORTING

(30) Priorité: 22.12.2011 FR 1162316
(43) Date de publication de la demande: 29.10.2014
(73) Titulaire: Solystic, 92220 Bagneux (FR)
(72) Inventeur: HUGUES, Damien, F-26120 UPIE (FR); CAMPAGNOLLE, Pierre, F-26400 Allex (FR); PETIT, Marie, F-26000 Valence (FR)
(74) Mandataire: Prugneau, Philippe
(86) Numéro de dépôt international: PCT/FR2012/052335
(87) Numéro de publication internationale: WO 2013/093252

(56) Documents cités:
- DE-B3-102006 031 121
- FR-A1- 2 646 620

## Description

### Domaine technique

L'invention concerne de façon générale un dispositif de chargement/déchargement automatique d'objets plats empilés sur chant dans/hors de bacs de stockage pourvus chacun d'une plaque de fond recevant le chant des objets plats et traversée par au moins une fenêtre, le dispositif de chargement/déchargement automatique comportant au moins une zone d'accueil apte à recevoir les bacs de stockage et une zone d'empilage apte à recevoir les objets plats empilés sur chant selon la direction d'empilage avant chargement/après déchargement.

L'invention concerne également une machine de tri d'objets plats comportant au moins un dépileur, des moyens de convoyage et des sorties de tri dans lesquelles les objets plats sont destinés à être répartis selon un plan de tri prédéterminé.

L'invention concerne également un procédé de déchargement automatique d'objets plats empilés sur chant dans/hors de bacs de stockage pourvus chacun d'une plaque de fond recevant le chant des objets plats et traversée par au moins une fenêtre.

L'invention concerne enfin un procédé de tri postal au cours duquel on réalise au moins des étapes de déchargement d'objets plats empilés sur chant d'un bac de stockage, de dépilage des objets plats, de tri des objets plats, d'empilage des objets plats, et de chargement des objets plats dans au moins un bac de stockage.

Au sens de l'invention, un objet plat désigne notamment, mais non exclusivement, un envoi postal. Les envois postaux, susceptibles d'être chargés/déchargés automatiquement grâce au dispositif de l'invention, peuvent présenter des dimensions variables, mais également des caractéristiques mécaniques variables, en particulier en ce qui concerne leur rigidité. Ces envois postaux peuvent être, entre autres, une lettre simple, un magazine, une enveloppe avec ou sans fenêtre, un journal, ou encore un catalogue présenté dans une enveloppe en matière plastique ou en papier, avec ou sans soufflet.

### Technique antérieure

De manière connue, au cours du processus de tri des objets plats sur chant, des premiers bacs contenant des objets plats sur chant sont amenés jusqu'à une machine de tri au niveau de laquelle les premiers bacs de stockage sont déchargés. Les objets plats sont arrangés sur chant, à l'entrée de la machine de tri, sous forme de piles. Les objets plats sont ensuite dépilés puis triés selon un plan de tri déterminé, répartis parmi des sorties de tri au niveau desquelles ils sont empilés sur chant selon leur destination. Ensuite, ces piles d'objets plats triés sont récupérées manuellement par un opérateur et placées dans des seconds bacs de stockage. Notamment lorsque les objets plats sont empilés sur chant, les opérations de déchargement et de chargement de bac de stockage doivent être réalisées manuellement ce qui complexifie les processus de tri, le rend moins fiable et d'un rendement limité. De plus, l'utilisation de bacs de stockage différents les uns des autres nécessite une gestion compliquée des flux de circulation des bacs de stockage et des capacités de stockage importantes en bacs de stockage, et l'utilisation d'unités de transbacage d'objets plats peu rentables.

La préambule de la revendication 1 ou de la revendication 11 est décrit dans DE-A-10 2006 031 121 ou FR-A- 2 646 620

### Exposé de l'invention

Le but de l'invention est de remédier à ces inconvénients en proposant un dispositif de chargement/déchargement automatique permettant de charger et décharger automatiquement des bacs de stockage avec des objets plats empilés sur chant et un procédé de déchargement automatique d'objets plats empilés sur chant permettant d'améliorer les rendements de traitement des objets plats tout en préservant l'intégrité des objets plats et en utilisant un type de bacs de stockage unique permettant de faciliter la gestion des bacs de stockage.

A cet effet, l'invention a pour objet un dispositif de chargement/déchargement automatique d'objets plats empilés sur chant dans/hors de bacs de stockage pourvus chacun d'une plaque de fond recevant le chant des objets plats et traversée par au moins une fenêtre, le dispositif de chargement/déchargement automatique comportant au moins une zone d'accueil apte à recevoir successivement lesdits bacs de stockage et une zone d'empilage apte à recevoir les objets plats empilés sur chant selon la direction d'empilage avant chargement/après déchargement, caractérisé en ce qu'il comporte au moins un actionneur fixe et un actionneur mobile, destinés simultanément l'un à être en regard de la fenêtre, l'autre à recevoir l'appui du bac de stockage, et déplaçables l'un par rapport à l'autre entre :
- une position d'attente dans laquelle l'actionneur fixe ou mobile en regard de la fenêtre est en retrait de l'actionneur mobile ou fixe de sorte que le bac de stockage puisse reposer respectivement sur l'actionneur mobile ou fixe sans que respectivement l'actionneur fixe ou mobile ne soit en contact avec les objets plats,
- une position de déchargement dans laquelle respectivement l'actionneur mobile ou fixe est en retrait de l'actionneur fixe ou mobile de sorte que l'actionneur fixe ou mobile puisse traverser la fenêtre en portant les objets plats à charger/décharger jusqu'à affleurer la zone d'empilage sans que le bac de stockage ne soit interposé entre les objets plats et la zone d'empilage.

L'idée à la base de l'invention est de prévoir deux actionneurs, un actionneur mobile, un actionneur fixe, l'un étant apte à traverser le bac de stockage pour déplacer les objets plats par rapport au bac en leur servant d'appui pour les extraire du bac de stockage pour permettre en utilisant un même bac de stockage, son chargement automatique et son déchargement automatique.

Le dispositif de chargement/déchargement automatique selon l'invention peut avantageusement présenter les particularités suivantes :
- il peut comporter des moyens de réglage agencés pour adapter la longueur de la zone d'empilage, selon la direction d'empilage, entre une longueur maximale et une longueur minimale correspondant à la longueur de la pile d'objets plats qu'elle reçoit ;
- il peut comporter au moins une navette portant les actionneurs fixe et mobile et définissant la zone d'accueil, la navette étant mobile selon la direction d'empilage, de sorte que la zone d'accueil reste adjacente à la zone d'empilage quelle que soit la longueur de la zone d'empilage, la navette étant ainsi mobile entre une position amont correspondant à la zone d'empilage présentant une longueur maximale et une position aval correspondant à la zone d'empilage présentant une longueur minimale ;
- il peut comporter au moins une courroie principale de type sans fin, guidée par des poulies dont au moins une poulie intermédiaire haute et une poulie intermédiaire basse portées par la navette et une poulie aval haute, une poulie aval basse et une poulie amont fixes prévues de part et d'autres de la navette, le brin utile de la courroie s'étendant entre la poulie intermédiaire haute et la poulie aval haute définissant la zone d'empilage, la translation de la palette provoquant simultanément la variation de longueur de la zone d'empilage et le maintien de la zone d'accueil adjacente à la zone d'empilage ;
- entre la poulie amont et la poulie intermédiaire basse, la courroie principale définit un brin opposé sensiblement parallèle au brin utile de sorte que la variation de longueur de la zone d'empilage lors du déplacement de la navette n'impacte pas la longueur totale de la courroie principale ;
- le dispositif de chargement/déchargement automatique peut comporter une sole rigide coulissante prévue sous le brin utile de la courroie principale et agencée pour rigidifier le brin utile, la sole rigide étant agencée pour être coulissante et asservie à la navette de sorte à suivre la variation de longueur de la zone d'empilage ;
- le dispositif de chargement/déchargement automatique peut comporter au moins une palette, mobile entre au moins une position d'accueil haute dans laquelle elle est au-dessus de la zone d'accueil, une position d'accueil basse amont prévue sous la position d'accueil haute et dans laquelle elle est destinée à être reçue dans le bac de stockage à l'arrière de l'objet plat le plus éloigné de la zone d'empilage, une position d'empilage décalée vers l'aval de la position d'accueil basse et dans laquelle elle est destinée à retenir l'extrémité amont de la pile d'objets plats à dépiler/dépilés,
- la palette est couplée à des moyens de calage agencés pour déplacer la palette de sa position d'accueil basse amont vers une position d'accueil basse aval de sorte à tasser les objets plats contenus dans le bac de stockage selon la direction d'empilage et selon une valeur de pression prédéterminée,
- la palette est couplée à des moyens d'orientation aptes à modifier l'inclinaison de la palette entre une position verticale dans laquelle elle est sensiblement perpendiculaire à la direction d'empilage et apte à être insérée dans le bac de stockage, et une position inclinée dans laquelle sa partie basse est en aval de sa partie haute par rapport à la direction d'empilage de sorte à pouvoir retenir une pile d'objet plats.

L'invention a également pour objet une machine de tri d'objets plats comportant au moins un dépileur, des moyens de convoyage et des sorties de tri dans lesquelles les objets plats sont destinés à être répartis selon un plan de tri prédéterminé, caractérisé en ce qu'elle comporte au moins un dispositif de chargement/déchargement automatique tel que décrit précédemment et prévu respectivement en amont dudit dépileur ou en aval d'au moins une desdites sorties de tri.

L'invention a également pour objet un procédé de déchargement automatique d'objets plats empilés sur chant dans/hors de bacs de stockage pourvus chacun d'une plaque de fond recevant le chant des objets plats et traversée par au moins une fenêtre, caractérisé en ce qu'il comporte au moins :
- une étape d'alimentation au cours de laquelle on place au moins un bac de stockage contenant des objets plats empilés sur chant, sur une zone d'accueil au niveau de laquelle il est supporté par au moins un actionneur fixe, mobile, et la fenêtre est en regard respectivement de l'actionneur mobile, fixe,
- une étape d'extraction au cours de laquelle on déplace les actionneurs mobile, et fixe l'un par rapport à l'autre dans un premier sens de sorte que respectivement l'actionneur mobile, fixe traverse la fenêtre afin que le chant des objets plats soit en appui sur l'extrémité de l'actionneur mobile, fixe et éloigné progressivement de la plaque de fond jusqu'à ce qu'à être au-dessus des panneaux externes du bac de stockage et affleurer une zone d'empilage apte à recevoir les objets plats après déchargement,
- une étape de transfert au cours de laquelle, on déplace les objets plats selon ladite direction d'empilage, de l'extrémité de l'actionneur mobile, fixe vers la zone d'empilage au niveau de laquelle on accumule les objets plats déchargés sous la forme d'une pile,
- une étape de libération du bac de stockage au cours de laquelle on déplace les actionneurs mobile, et fixe l'un par rapport à l'autre dans un second sens opposé au premier sens de sorte que la fenêtre soit libérée du passage respectivement de l'actionneur mobile, fixe et que le bac de stockage puisse être retiré de la zone d'accueil.

Le procédé de déchargement automatique selon l'invention peut avantageusement présenter les particularités suivantes :
- avant l'étape d'extraction, on réalise une étape de réglage au cours de laquelle on ajuste selon la direction d'empilage la longueur de la zone d'empilage en fonction de la longueur de la pile d'objets plats qu'elle porte et une étape d'approche au cours de laquelle on déplace le bac de stockage selon la direction d'empilage vers l'aval de sorte qu'il soit tangent à la zone d'empilage quelle que soit la longueur de la zone d'empilage,
- on réalise l'étape de réglage et l'étape d'approche simultanément,
- avant l'étape d'extraction, on réalise une étape de calage au cours de laquelle on comprime vers l'aval et selon la direction d'empilage, la pile d'objets plats contenus dans le bac de stockage, on contrôle la résistance opposée à la compression et, lorsque cette résistance atteint un seuil prédéterminé, on relâche la pression à un niveau inférieur au seuil prédéterminé de sorte à autoriser un éventuel rélargissement de la pile comprimée, puis on maintient la pression à une valeur de pression prédéterminée sous le seuil pour éviter l'endommagement des objets plats lors de l'extraction ,

L'invention a également pour objet un procédé de tri postal au cours duquel on réalise au moins des étapes de déchargement d'objets plats empilés sur chant d'un bac de stockage, de dépilage des objets plats, de tri des objets plats, d'empilage des objets plats, et de chargement des objets plats dans au moins un bac de stockage, caractérisé en ce que l'on réalise les étapes de déchargement telles que décrites précédemment en utilisant un bac de stockage d'un type prédéterminé dont la plaque de fond est traversée par au moins une fenêtre, et en ce que, lors du chargement, on utilise un bac de stockage du même type prédéterminé de sorte à n'utiliser qu'un seul type de bac de stockage au cours dudit procédé de tri postal.

### Description sommaire des dessins

La présente invention sera mieux comprise et d'autres avantages apparaîtront à la lecture de la description détaillée de deux modes de réalisation pris à titre d'exemples nullement limitatifs et illustrés par les dessins annexés, dans lesquels :
- la figure 1 est une vue en perspective de dessus d'un bac de stockage utilisable avec le dispositif de chargement/déchargement automatique selon l'invention ;
- la figure 2 est une vue en perspective d'une navette du dispositif de chargement/déchargement automatique selon l'invention ;
- les figures 3, 4 et 5, 6 sont des vues schématiques de coté de deux principes de fonctionnement différents du dispositif de chargement/déchargement automatique selon l'invention ;
- les figures 7 à 15 sont des vues schématiques de coté des étapes du procédé de déchargement automatique selon l'invention ;
- les figures 16 et 17 sont des vues schématiques de coté du dispositif de chargement/déchargement automatique selon l'invention illustrant notamment deux positions différentes de la navette de la figure 2.

### Description des modes de réalisation

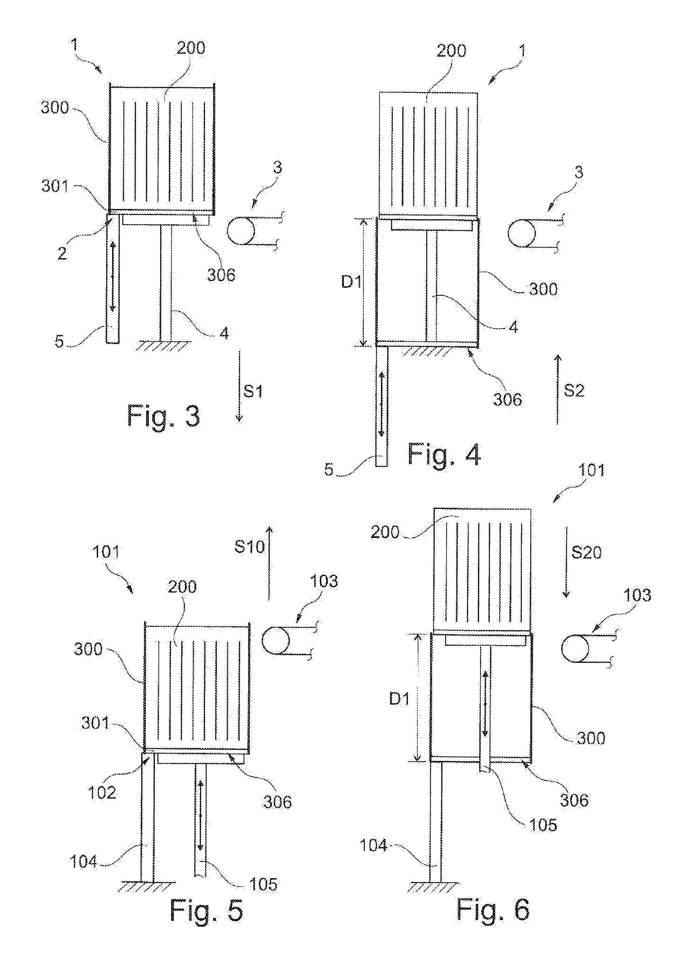

Sur les figures 3 à 17, les objets plats en pile sont schématisés par un cadre rectangulaire contenant des hachures irrégulières n'atteignant pas le bord du cadre.

Le dispositif de chargement/déchargement automatique 1, 101 et le procédé de déchargement automatique selon l'invention sont destinés au chargement/déchargement automatiquement d'objets plats 200 empilés sur chant dans/hors d'un bac de stockage 300. Dans la suite, le dispositif de chargement/déchargement automatique 1, 101 est décrit en tant que dispositif de déchargement automatique. Il est bien entendu que ce même dispositif de déchargement automatique 1, 101 peut être utilisé, en réalisant les étapes en sens inverse, en tant que dispositif de chargement automatique.

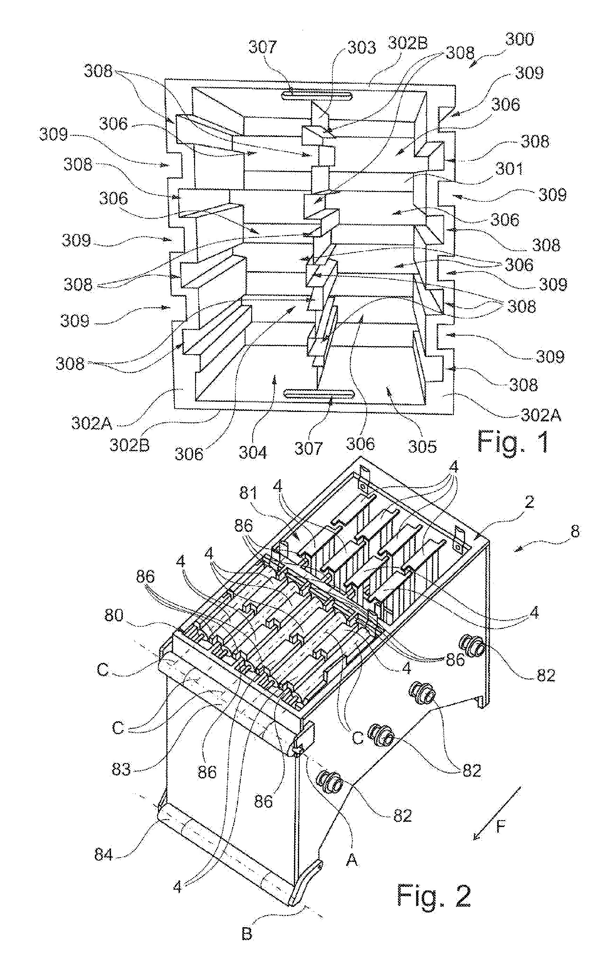

La figure 1 représente un bac de stockage 300 utilisable avec le dispositif de déchargement automatique 1, 101 et le procédé de déchargement automatique selon l'invention. Un tel bac de stockage 300 comporte une plaque de fond 301 et des panneaux 302 dont des panneaux externes 302A, 302B sensiblement parallèles deux à deux, et une cloison 303 sensiblement parallèle à deux des panneaux externes 302A définissant avec la plaque de fond 301 des premier et second compartiments 304, 305 adjacents entre eux. Ces premier et second compartiments 304, 305 présentent des ouvertures opposées à la plaque de fond 301, et par lesquelles les objets plats (non représentés sur cette figure) peuvent être chargés et déchargés dans les premier et second compartiments 304, 305. Dans l'exemple illustré, les premier et second compartiments 304, 305 sont sensiblement de mêmes dimensions, ils peuvent également être de dimensions différentes, Lorsque les objets plats sont stockés dans l'un ou l'autre, ou les deux premier et second compartiments 304, 305 du bac de stockage 300, leur chant repose sur la plaque de fond 301 et le flan de la pile qu'ils définissent est en appui contre la cloison 303 et les panneaux externes 302A.

Les panneaux externes 302B se faisant face peuvent comporter des orifices oblongs 307 (visibles sur la figure 1) servant de poignées pour saisir le bac de stockage 300. La plaque de fond 301 est par ailleurs traversée par deux rangées de fenêtres 306, une rangée étant prévue dans chaque premier et second compartiment 304, 305. Les fenêtres 306 se présentent sous la forme de fentes, sensiblement perpendiculaires à la cloison 303 et globalement de forme en Z comportant des première et seconde branches définissant les extrémités de la fenêtre 306. Dans l'exemple illustré, les fenêtres 306 sont toutes sensiblement identiques entre elles en forme et en dimensions. Elles sont disposées à intervalles réguliers, sensiblement parallèles entre elles et avec la même orientation. Elles sont de plus sensiblement perpendiculaires à la cloison 303 et aux panneaux externes 302A se faisant face. Les objets plats sont destinés à être disposés de sorte que leurs chants soient sensiblement parallèles à la cloison 303 et donc sensiblement perpendiculaire aux fenêtres 306. Les fenêtres 306 de chaque premier, second compartiment 304, 305 s'étendent entre la cloison 303 et le panneau externe 302A correspondant dans lesquelles elles se prolongent. A cet effet, en regard de chaque extrémité de fenêtre 306, les panneaux externes 302A et la cloison 303 comportent une pluralité de rainures 308 dont la forme et les dimensions correspondent à celles des extrémités des fenêtres 306 en regard desquelles elles sont respectivement placées. Chaque fenêtre 306 est ainsi encadrée par deux rainures308. Les fenêtres 306 sont destinées à autoriser individuellement le passage, au travers de la plaque de fond 301, d'un actionneur (non représenté sur cette figure) coulissant et pénétrant dans les rainures 308. Selon un mode de réalisation non représenté, le bac de stockage peut comporter un compartiment unique. Le bac de stockage 300 comporte en outre des rainures complémentaires 309 portées par les faces externes des panneaux externes 302A, 302B. Ces rainures complémentaires 309 sont sensiblement parallèles aux rainures 308, par exemple disposées en alternance par rapport à ces dernières. Ces rainures complémentaires 309 sont aptes à coopérer avec des éléments de calage (détaillés plus loin en référence à la figure 2), externes au bac de stockage 300. La coopération entre les rainures complémentaires 309 et les éléments de calage permet d'assurer un positionnement fiable du bac de stockage 1 par rapport à la navette décrite plus loin. De même, la plaque de fond peut être traversée de fentes en nombre et/ou formes et/ou dimensions différentes et/ou avec des intervalles différents et/ou avec des orientations différentes.

Le dispositif de déchargement automatique 1, 101 selon l'invention peut fonctionner selon deux principes différents illustrés par les figures 3 et 4 pour le premier principe et par les figures 5 et 6 pour le second principe. Par souci de simplification et de manière non limitative, ces principes sont détaillés ci-après, sur la base d'un bac de stockage 300 dont la plaque de fond 301 est traversée par une fenêtre 306 unique et coopérant avec un actionneur fixe unique et avec un actionneur mobile unique. Quel que soit le principe de fonctionnement, le dispositif de déchargement automatique 1, 101 selon l'invention comporte une zone d'accueil 2, 102 apte à recevoir un bac de stockage 300 contenant des objets plats 200 empilés sur chant à vider, et une zone d'empilage 3, 103 apte à recevoir les objets plats 200 en pile sur chant après déchargement. La zone de stockage est avantageusement pourvue d'éléments de calage non représentés aptes à coopérer avec les rainures complémentaires 309 pour fiabiliser la position du bac de stockage sur la zone d'accueil 2. Le dispositif de déchargement automatique 1, 101 comporte également un actionneur fixe 4, 104 et un actionneur mobile 5, 105 destinés l'un à recevoir l'appui du bac de stockage 300, l'autre à être en regard de la fenêtre 306 du bac de stockage 300. La mobilité de l'actionneur mobile 5, 105 est symbolisée par une flèche double sens.

Selon le premier principe de fonctionnement du dispositif de déchargement automatique 1 illustré par les figures 3 et 4, le bac de stockage 300 est en appui sur l'actionneur mobile 5, l'actionneur fixe 4 est en regard de la fenêtre 306, la zone d'accueil 2 est sensiblement à la même hauteur que la zone d'empilage 3. Dans la position d'attente de l'actionneur mobile 5 (figure 3), le bac de stockage 300 est dans une position haute dans laquelle la plaque de fond 301 est sensiblement à la même hauteur que la zone d'empilage 3. Ainsi, le chant des objets plats 200 empilés dans le bac de stockage 300 et en contact avec la plaque de fond 301 est sensiblement à la même hauteur que la zone d'empilage 3. L'extrémité libre de l'actionneur fixe 4 est sous la fenêtre 306 en-dessous de la plaque de fond 301, sans contact avec les objets plats 200. Pour passer de la position d'attente à la position de déchargement, on déplace l'actionneur mobile 5 verticalement dans un premier sens illustré par la flèche S1. L'actionneur mobile 5 est ainsi descendu, entrainant la descente du bac de stockage 300 qu'il porte. Dans la position de déchargement obtenue (figure 4), le bac de stockage 300 est dans une position basse dans laquelle il est escamoté par rapport à la zone d'empilage 3. Pour permettre au bac de stockage 200 d'être ainsi escamoté entre l'actionneur fixe 4 et la zone d'empilage 3, la distance D1 séparant ces derniers est au moins égale à la hauteur du bac de stockage 300. Le chant des objets plats 200 reste en appui sur l'extrémité libre de l'actionneur fixe 4 qui traverse la fenêtre 306. Les objets plats 200 sont donc toujours en position haute, leur chant étant sensiblement à la même hauteur que la zone d'empilage 3. Le bac de stockage 300 étant en-dessous, il n'est pas interposé entre les objets plats 200 à décharger et la zone d'empilage 3. Les objets plats 200 peuvent ainsi être transférés par simple translation, sans que le bac de stockage 300 ne gène ce transfert. Une fois que les objets plats 200 sont transférés de l'extrémité libre de l'actionneur fixe 4, le bac de stockage 300 et l'actionneur mobile 5 peuvent être remontés verticalement selon un second sens opposé au premier sens S1 et illustré par la flèche S2.

Selon le second principe de fonctionnement du dispositif de déchargement automatique 101 illustré par les figures 5 et 6, le bac de stockage 300 est en appui sur l'actionneur fixe 104, l'actionneur mobile 105 est en regard de la fenêtre 306, la zone d'accueil 102 est prévue en dessous de la zone d'empilage 103, séparée par une distance D1 au moins égale à la hauteur du bac de stockage 300. Dans la position d'attente de l'actionneur mobile 105 (figure 5), le bac de stockage 300 est dans une position basse dans laquelle il est escamoté par rapport à la zone d'empilage 103, les objets plats 200 sont empilés sur chant dans le bac de stockage 300, en appui sur la plaque de fond 301. L'extrémité libre de l'actionneur mobile 105 est sous la fenêtre 306 en-dessous de la plaque de fond 301, sans contact avec les objets plats 200. Pour passer de la position d'attente à la position de déchargement, on déplace l'actionneur mobile 105 verticalement dans un premier sens illustré par la flèche S10. L'actionneur mobile 5 est ainsi monté, entrainant la montée des objets plats 200 qu'il porte. Dans la position de déchargement obtenue (figure 6), le bac de stockage 300 reste dans sa position basse, les objets plats 200 sont dans une position haute dans laquelle leur chant en appui sur l'extrémité libre de l'actionneur mobile 105 est sensiblement à la même hauteur que la zone d'empilage 103 sur laquelle ils peuvent alors être transférés par simple translation, sans que le bac de stockage 300 ne gène ce transfert. Une fois que les objets plats 200 sont transférés de l'extrémité libre de l'actionneur mobile 105, le bac de stockage 300 et l'actionneur mobile 5 peuvent être redescendus verticalement selon un second sens opposé au premier sens S10 et illustré par la flèche S20.

Le dispositif de déchargement automatique 1, 101 selon l'invention comporte des moyens de motorisation aptes à déplacer l'actionneur mobile et une unité de commande apte à provoquer le déplacement séquentiel des différents éléments constituant le dispositif de déchargement automatique 1, 101.

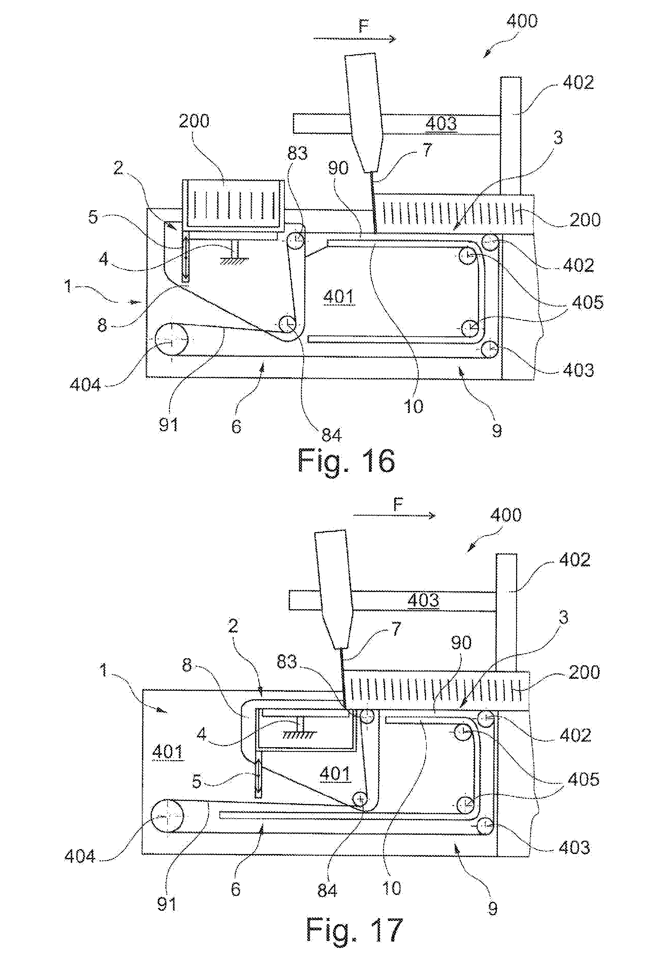

Comme illustré par les figures 16 et 17, le dispositif de déchargement automatique 1 peut être intégré à une machine de tri 400 et comporter des moyens de réglage 6 de la longueur de la zone d'empilage 3. Dans cet exemple, le dispositif de déchargement automatique 1 fonctionne selon le premier principe de fonctionnement décrit précédemment. Il est bien entendu qu'il peut fonctionner selon le second principe. De manière non limitative, la machine de tri 400 comporte un bâti 401 pourvu d'une potence 402 dont le bras horizontal 403 permet le guidage en translation d'une palette 7 selon une direction d'empilage symbolisée par la flèche F.

Le dispositif de déchargement automatique 1 comporte une navette 8 intégrant les actionneurs fixe 4 et mobile 5 tels que décrits précédemment. Un exemple de navette 8 est illustré par la figure 2. Cette navette 8 se présente sous la forme d'un caisson, dans l'exemple illustré, un caisson double comportant deux chambres 80, 81 séparées par une paroi intermédiaire 85. Les chambres 80, 81 sont aptes chacune à recevoir et loger un bac de stockage (non représenté sur la figure 2). La navette 8 est pourvue, dans chacune de ses chambres 80, 81, d'une double rangée de doigts 4 définissant les actionneurs fixes. Ces doigts 4 sont aptes à traverser les fenêtres 306 du bac de stockage 300 de la figure 1. Pour ce faire, les extrémités libres des doigts 4 présentent globalement une forme en Z complémentaires à celle des fenêtres 306. Le dispositif de déchargement automatique 1 étant destiné dans cet exemple à un bac de stockage 300 comportant deux compartiments 304, 305, les doigts 4 sont disposés par paires de doigts 4, prévus en regard l'un de l'autre, une paire contenant un doigt 4 destiné à une fenêtre 306 du premier compartiment 304 du bac de stockage 300 et un doigt 4 destiné à la fenêtre 306 du second compartiment 305 en regard de la fenêtre 306 précédente. Les doigts 4 s'étendent du fond de la chambre 80, 81 correspondante jusqu'en haut des parois externes de la navette 8. Comme détaillées plus loin, les extrémités libres des doigts 4 sont destinées à recevoir le chant des objets plats 200. Par ailleurs, la navette 8 comporte des éléments de calage 86 portés par les faces opposées de la paroi intermédiaire 85. Dans l'exemple illustré, ces éléments de calage 86 se présentent sous la forme de languettes de section rectangulaire, prévues en haut de la paroi intermédiaire 85 et disposées chacune, en regard du creux formé par la branche de la forme en Z du doigt 4 adjacent. Les éléments de calage 86 peuvent également s'étendre sur toute la hauteur de la paroi intermédiaire 85. Les éléments de calage 86 servent au guidage du bac de stockage pendant ses déplacements verticaux dans la navette 8 en coopérant avec les rainures complémentaires 309, du bac de stockage 300. Les éléments de calage 86 permettent notamment de caler deux bacs de stockage 300 cote à cote. De plus, la navette 8 comporte deux rangées de rouleaux 5 définissant les actionneurs fixes. Une rangée de rouleaux 5 est disposée dans chaque chambre 80, 81. Les rouleaux 5 sont portés par des axes C sensiblement parallèles entre eux et parallèles à l'alignement de chaque paire de doigts 4. Les rouleaux 5 sont dimensionnés de sorte que chacun s'étend entre deux paires de doigts 4, parallèlement aux extrémités libres des doigts 4. Ces rouleaux 5 sont montés individuellement pivotant par rapport à leur axe C respectif. Ils sont portés par un support (non représenté), mobile par rapport aux doigts 4 et apte à translater les rouleaux 5, simultanément, entre une position d'attente dans laquelle ils dépassent des chambres 80, 81 entre les doigts 4, et une position de déchargement dans laquelle ils sont en retrait des extrémités libres des doigts 4, logés dans le bas des chambres 80, 81. Le dessus de la navette 8 forme la zone d'accueil 2 des bacs de stockage 300. Ainsi, lorsque les rouleaux 5 sont dans leur position de déchargement, le bac de stockage 300 peut être posé, dans sa position haute, sur les rouleaux 5, les doigts 4 étant alors en regard des fenêtres 306. Par leur rotation, les rouleaux 5 facilitent la mise en place du bac de stockage 300 sur la zone d'accueil 2. Comme détaillé plus loin, lorsque les rouleaux 5 passent de leur position d'attente à leur position de déchargement, le bac de stockage 300 descend progressivement dans la chambre 80, 81 vers sa position basse, les extrémités libres des doigts 4 alors en contact avec le chant des objets plats 200, les maintiennent dans la position haute. Le bac de stockage 300 est descendu jusqu'à ce que le sommet de ses panneaux externes 302A, 302B soit en retrait sous les extrémités libres des doigts 4 de sorte que les objets plats 200 puissent être transférés vers la zone d'empilage 3.

La navette 8 est par ailleurs prévue mobile en translation par rapport au bâti, selon la direction d'empilage F sensiblement horizontale, entre une position amont et une position aval, de sorte à pouvoir rapprocher le bac de stockage 300 présent sur la zone d'accueil 2 de l'extrémité amont d'une pile d'objets plats 200 présente sur la zone d'empilage 3. Dans cette configuration optimisée de rapprochement représentée sur la figure 17, la zone d'accueil 2 est au plus proche de la pile d'objets plats 200 déjà présente sur la zone d'empilage 3. Ainsi, les objets plats 200 nouvellement déchargés du bac de stockage 300, peuvent être facilement et directement transférés et accumulés à l'arrière de la pile déjà présente sur la zone d'empilage 3. Pour permettre la translation de la navette 8, les parois externes de la navette 8, parallèles à la direction d'empilage F, sont pourvues de plots de guidage 82 alignés selon la direction d'empilage F et aptes à coopérer avec une glissière (non représentée) prévue sur le bâti 401. Par ailleurs, la paroi externe de la navette 8 destinée à être orientée vers la zone d'empilage 3 est pourvue d'une poulie intermédiaire haute 83 et d'une poulie intermédiaire basse 84 d'axes A, B sensiblement parallèles entre eux et destinés à être perpendiculaires à la direction d'empilage F. Les axes A, B sont par ailleurs alignés dans un plan sensiblement perpendiculaire à la direction d'empilage F.

Le dispositif de déchargement automatique 1 comporte une poulie aval haute 402, une poulie aval basse 403 et une poulie amont 404 portées par le bâti 401. La navette 8 est disposée de sorte que les poulies intermédiaires haute et basse 83, 84 soient situées entre les poulies aval haute et basse 402, 403 et la poulie amont 404. La poulie amont 404 est par exemple motrice, les autres étant de type poulies folles. Le dispositif de déchargement automatique 1 comporte une courroie principale 9 de type sans fin, guidée successivement par la poulie amont 404, les poulies intermédiaires basse 84 et haute 83, la poulie aval haute 402 puis la poulie aval basse 403. Le brin utile 90 de la courroie 9 situé entre les poulies intermédiaires hautes 83 et la poulie aval haute 402 définit la zone d'empilage 3. Les poulies intermédiaires basse 84 et haute 83 étant portées par la navette 8, la position de leurs axes A, B varie avec la position de la navette 8. Comme détaillée plus loin, la mobilité de la navette 8 permet d'approcher la zone d'accueil 2 de la zone d'empilage 3. La navette 8 forme ainsi des moyens de déplacement du dispositif de déchargement 1. Les poulies intermédiaires basse 84 et haute 83, la poulie aval haute 402 et la poulie amont sont agencées pour que le brin utile 90 et le brin opposé 91 reliant de la poulie amont 404 à la poulie intermédiaire basse 84 soient sensiblement parallèles entre eux. De plus, la navette 8 est agencée pour se déplacer sensiblement parallèlement aux brins utile 90 et opposé 91. Ainsi, lorsque la navette 8 est déplacée entre ses positions amont et aval, le brin utile 90 se raccourcit et le brin opposé 91 s'allonge d'autant, et inversement lorsque la navette 8 est déplacée de sa position aval à sa position amont. De ce fait, la longueur de la courroie principale 9 est sensiblement constante quelle que soit la position de la navette 8. La longueur de la zone d'empilage 3 est directement liée à celle du brin utile 90. Ainsi, la navette 8, les poulies intermédiaires basse 84 et haute 83 et la courroie 9 forment des moyens de réglage de la zone d'empilage 3.

Le dispositif de déchargement 1 comporte par ailleurs une sole rigide 10 coulissante, prévue sous le brin utile 90. Cette sole rigide 10 est par exemple de type volet roulant. Elle est guidée par des poulies complémentaires 405 et par des glissières latérales (non représentées) permettant d'assurer sa rigidité au moins sous la zone d'empilage 3. Cette sole rigide 10 est asservie à la navette 8 de sorte que le déplacement de la navette 8 provoquant la variation de la longueur de la zone d'empilage 3, provoque également la variation de la longueur de la sole rigide 10 sous la zone d'empilage 3. Pour ce faire, l'extrémité de la sole rigide prévue sous le brin utile 90 est par exemple solidaire de la navette 8. Ainsi, la longueur de la sole rigide 10 présente sous le brin utile 90 est directement liée à la longueur de la zone d'empilage 3 et permet de rigidifier le brin utile 90.

Comme détaillée plus loin, la palette 7 est mobile selon la direction d'empilage F entre les positions suivantes :
- une position d'accueil haute dans laquelle elle est au-dessus de la zone d'accueil 2 pour pouvoir être au-dessus d'un bac de stockage 300 présent sur la zone d'accueil 2,
- une position d'accueil basse amont prévue plus bas et dans le même plan que la position d'accueil haute, dans laquelle elle est logée dans le bac de stockage 300 présent sur la zone d'accueil 2 à l'amont les objets plats 200 présents dans le bac de stockage 300,
- une position d'accueil basse aval prévue à la même hauteur que la position d'accueil basse et dans laquelle elle presse vers l'avant les objets plats 200 contenus 300 dans le bac de stockage 300,
- une position d'empilage prévue en aval de la position d'accueil basse aval et dans laquelle elle est au-dessus de la zone d'empilage 3.
La palette 7 est de plus couplée à des moyens de calage (non représentés) permettant, dans la position d'accueil basse de la palette 7, de faire varier la pression appliquée sur la pile d'objets plats 200 empilés dans le bac de stockage 300. Par ailleurs, afin de pouvoir être insérée dans le bac de stockage 300 contenant les objets plats 200 empilés sur chant, la palette 7 a par exemple une forme complémentaire à celles des rainures 308 afin de pouvoir s'y loger sans risque de détérioration des objets plats 200. Enfin, la palette 7 est couplée à des moyens d'orientation (non représentés) aptes à l'incliner selon la direction d'empilage F. La palette 7 est ainsi inclinable entre une position verticale dans laquelle elle est sensiblement perpendiculaire à la direction d'empilage F pour pouvoir être insérée dans le bac de stockage 300 et une position inclinée dans laquelle elle est inclinée par rapport à la direction d'empilage F de sorte que sa partie basse soit en aval de sa partie haute pour mieux retenir la pile d'objets plats 200.

La figure 16 illustre le dispositif de déchargement 1 avec l'actionneur mobile 5 (par exemple les rouleaux de la figure 2) dans sa position d'attente, le bac de stockage 300 reposant dessus étant alors dans sa position haute. La palette 7 est dans sa position d'empilage dans laquelle elle est au-dessus de la zone d'empilage et retient l'arrière d'une pile d'objets plats 200 déjà présents sur la zone d'empilage 3. La navette 8 est dans sa position aval. La zone d'empilage 3 et la sole rigide 10 ne sont pas dans une configuration optimisée de rapprochement par rapport à la longueur de la pile d'objets plats 200 présente sur la zone d'empilage 3, le brin utile 90 ayant une longueur maximale.

La figure 17 illustre le dispositif de déchargement 1 avec l'actionneur mobile 5 dans sa position de déchargement, le bac de stockage 300 reposant dessus étant alors dans sa position basse, escamoté dans la navette 8. Sur cette figure illustrant une configuration intermédiaire, une partie des objets plats 200 préalablement présents dans le bac de stockage sont encore portés par les extrémités de l'actionneur fixe 4 (par exemple, les doigts de la figure 2) et, en cours de transfert vers la zone d'empilage 3 au moyen de la palette 7 déplacée vers sa position d'empilage. La navette 8 est dans sa position amont dans laquelle la zone d'accueil 2 et la zone d'empilage 3 sont dans la configuration optimisée de rapprochement avec la longueur de la zone d'empilage adaptée à la longueur de la pile d'objets plats 200 qu'elle porte et le bord aval du bac de stockage 300 affleurant l'extrémité amont de la zone d'empilage 3 et donc de la pile d'objets plats 200 préexistante sur la zone d'empilage 3.

La machine de tri postal 400 selon l'invention et comportant le dispositif de déchargement automatique 1, peut en outre comporter des moyens d'amenée automatique (non représentés) des bacs de stockage 300 jusqu'à la zone d'accueil 2 et des moyens de retrait de ces mêmes bacs de stockage 300, après leur déchargement, de la zone d'accueil 2. Selon un mode de réalisation non représenté, la zone d'accueil peut accepter simultanément plusieurs bacs de stockage.

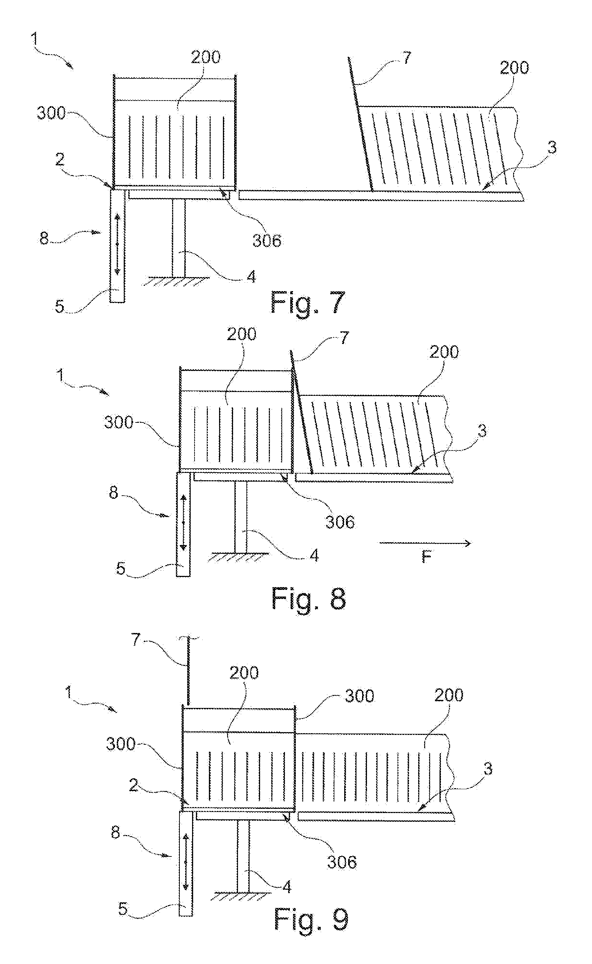

Les étapes du procédé de déchargement automatique selon l'invention sont explicitées ci-après, en référence aux figures 7 à 15, sur la base d'un dispositif de déchargement automatique 1 sensiblement similaire à celui des figures 3, 4, 16 et 17 et fonctionnant selon le premier principe de fonctionnement précédemment décrit. Sur ces nouvelles figures, la zone d'empilage est symbolisée par une plaque et la sole rigide n'est pas représentée.

En référence à la figure 7, l'actionneur mobile 5 est dans sa position haute dans laquelle son extrémité libre est sensiblement en regard de la zone d'empilage 3, la navette 8 est dans sa position amont dans laquelle elle est éloignée de la pile d'objets plats 200 préalablement placée sur la zone d'empilage 3, la palette 7 est dans ses positions d'empilage et inclinée dans lesquelles elle retient l'arrière de pile d'objets plats 200 préalablement placés sur la zone d'empilage 3, sa partie basse étant en aval de sa partie haute. Au cours d'une étape d'alimentation, on place sur la zone d'accueil 2 un bac de stockage 300 contenant des objets plats 200 empilés sur chant de sorte que le chant des objets plats 200 soit sensiblement perpendiculaire à la direction d'empilage F et que la fenêtre 306 soit sensiblement alignée avec la direction d'empilage F. A cet effet, on utilise les éléments de calage précédemment décrits (non illustrés sur cette figure) pour caler le bac de stockage 300 sur la zone d'accueil 2. Une fois placé sur la zone d'accueil 2, le bac de stockage 300 est en appui sur l'actionneur mobile 5 et l'extrémité libre de l'actionneur fixe 4 est en regard de la fenêtre 306.

En référence à la figure 8, on réalise simultanément une étape de réglage et une étape d'approche au cours desquelles on déplace la navette 8 de sa position amont vers sa position aval et on ajuste au plus court la longueur de la zone d'empilage 3 de sorte que le bac de stockage300 soit adjacent à l'extrémité amont de la pile d'objets plats 200 présente sur la zone d'empilage 3. Dans cette configuration, l'actionneur mobile 5 est dans sa position haute et la palette 7 est dans ses positions d'empilage et inclinée

En référence à la figure 9, on déplace la palette 7, selon la direction d'empilage F, de sa position inclinée à sa position verticale et de sa position d'empilage à sa position d'accueil haute dans laquelle elle est au-dessus des rainures (réf. 308 sur la figure 1) du bac de stockage 300 placé dans la zone d'accueil 2. Ces deux déplacements peuvent être réalisés simultanément ou successivement. Dans la configuration obtenue, l'actionneur mobile 5 est dans sa position haute et la navette 8 est dans sa position aval.

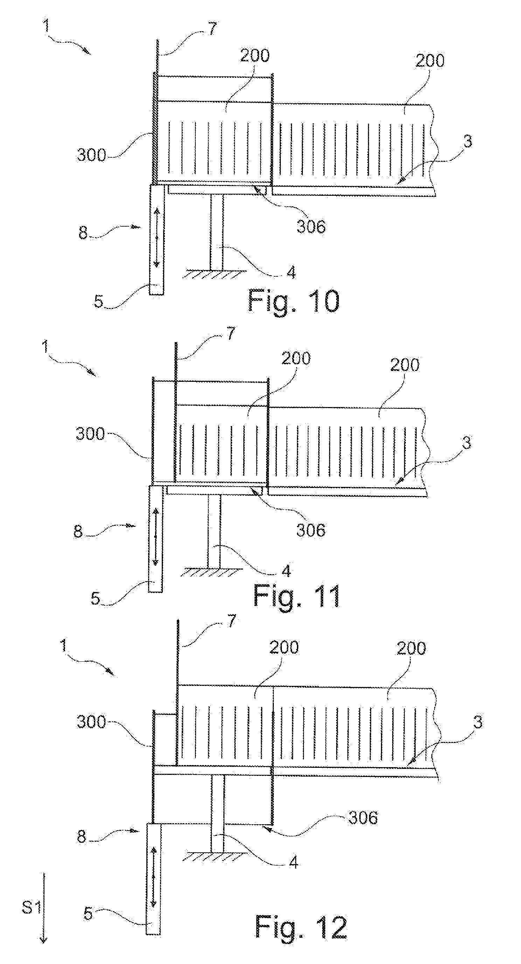

En référence à la figure 10, on maintient la palette 7 dans sa position verticale et on la déplace de sa position d'accueil haute à sa position d'accueil basse amont dans laquelle elle est dans le bac de stockage 300, logée dans les rainures (rainures 308 sur la figure 1) du peigne, à l'amont des objets plats 200 empilés dans le bac de stockage 300. Dans cette configuration, l'actionneur mobile 5 est dans sa position haute et la navette 8 est dans sa position aval. La paroi aval du bac de stockage 300 retient l'amont de la pile d'objets plats 200 présents sur la zone d'empilage.

En référence à la figure 11, on réalise alors une étape de calage au cours de laquelle on déplace la palette 7, en la maintenant dans sa position verticale, de sa position d'accueil basse amont vers l'aval de sorte à la décaler de la rainure amont pour comprimer la pile d'objets plats 200 contre la paroi aval du bac de stockage 300. Au cours de cette étape de calage, on contrôle la résistance opposée par les objets plats 200 et, lorsque cette résistance atteint un seuil prédéterminé, on relâche la pression à un niveau de pression inférieur au seuil prédéterminé. Ainsi, la palette 7 effectue éventuellement un mouvement de recul correspondant à un rélargissement de la pile d'objets plats 200 jusqu'à une position d'accueil basse dans laquelle la pile d'objets plats 200 dans le bac de stockage 300 est soumise à une pression contrôlée. Cette pression contrôlée est maintenue sous le seuil prédéterminé. Dans cette configuration, l'actionneur mobile 5 est dans sa position haute et la navette 8 est dans sa position aval. La paroi aval du bac de stockage 300 retient l'amont de la pile d'objets plats 200 présents sur la zone d'empilage 3.

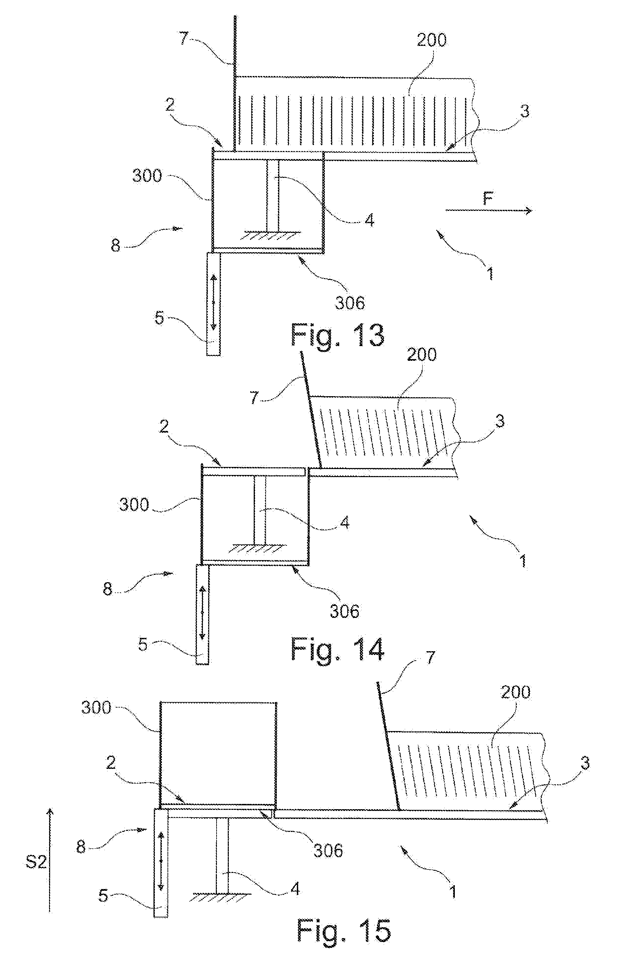

En référence à la figure 12, on réalise une étape d'extraction au cours de laquelle on déplace l'actionneur mobile 5 par rapport à l'actionneur fixe 4 selon un premier sens S1, de sa position haute à sa position basse. Le bac de stockage 300 porté par l'actionneur mobile 5 passe donc de sa position haute à sa position basse. Le chant des objets plats 200 vient en contact avec l'extrémité libre de l'actionneur fixe 4. Les objets plats 200, portés par l'actionneur fixe 4, restent donc dans la position haute leur chant sensiblement en regard de la zone d'empilage 3 de laquelle ils sont séparés par la paroi aval du bac de stockage 200. Pendant le déplacement de l'actionneur mobile 5 et du bac de stockage 300, l'amont de la pile d'objets plats 200 retenus sur l'actionneur fixe 4 est retenu par la palette 7 dans ses positions verticale et d'accueil basse aval. De plus, le bac de stockage 300 est guidé dans son déplacement par les éléments de calage (non représentés sur cette figure). Au fur et à mesure de ce déplacement, la pile d'objets plats 200 contenus dans le bac de stockage 300 est progressivement dans l'alignement direct de la pile d'objets plats 200 déjà présente sur la zone d'empilage 3. L'actionneur mobile 5 et le bac de stockage 300 descendent ainsi jusqu'à ce que la paroi aval du bac de stockage 300 ne soit plus interposée entre les objets plats 200 préalablement contenus dans le bac de stockage 300 et la pile d'objets plats 200 présente sur la zone d'empilage 3. La pile d'objets plats 200 portée par l'actionneur fixe 4 et par la zone d'empilage 3 ne forme plus qu'une. Cette configuration est illustrée par la figure 13 sur laquelle le chant des objets plats 200 est au-dessus du bac de stockage 300, l'actionneur mobile 5 et le bac de stockage 300 sont dans leur position basse, la navette 8 est dans sa position aval.

En référence à la figure 14, on réalise ensuite une étape de transfert au cours de laquelle on incline la palette 7 de sa position verticale à sa position inclinée et on déplace la navette 8, à l'inverse de la direction d'empilage F, de sa position aval à sa position amont et, simultanément, avec la place récupérée, on allonge ladite zone d'empilage 3 sous les objets plats 200 empilés nouvellement déchargés sur bac de stockage 300. Ainsi toute la pile d'objets plats 200 repose sur la zone d'empilage 3. Dans cette configuration, la navette 8 est dans sa position amont, l'actionneur mobile 5 est dans sa position basse, la palette 7 est dans ses positions inclinée et aval, le bac de stockage 300 est vide et les objets plats 200 qu'il contenait sont empilés avec les autres objets plats 200 sur la zone d'empilage 3.

En référence à la figure 15, on réalise ensuite une étape de libération du bac de stockage 300 au cours de laquelle on déplace l'actionneur mobile 5 portant le bac de stockage 200, selon un second sens S2 opposé au premier sens S1 de sa position basse à sa position haute. Pendant ce déplacement, le bac de stockage 300 est guidé par les éléments de calage (non représentés sur cette figure). Lorsque le bac de stockage 300 est dans sa position haute, l'actionneur mobile 5 ne traverse plus la fenêtre, le bac de stockage 300 peut alors librement être retiré de la zone d'accueil 2. Le cycle de déchargement peut être recommencé avec un autre bac de stockage 300 contenant d'autres objets plats 200 empilés sur chant. Les objets plats 200 empilés sur la zone d'empilage 3 sont peu à peu évacués par la machine de tri 400. La palette 7 est asservie à la machine de tri pour pouvoir suivre l'évolution de cette pile.

Le dispositif de chargement/déchargement automatique, la machine de tri, le procédé de déchargement automatique d'objets plats et le procédé de tri postal selon l'invention permettent ainsi d'automatiser les opérations de déchargement et de chargement d'objets plats empilés sur chant en utilisant un type de bac unique.

## Revendications

1. Dispositif de chargement/déchargement automatique (1, 101) d'objets plats (200) empilés sur chant dans/hors de bacs de stockage (300) pourvus chacun d'une plaque de fond (301) recevant le chant desdits objets plats (200) et traversée par au moins une fenêtre (306), ledit dispositif de chargement/déchargement (1, 101) comportant au moins une zone d'accueil (2 ;102) apte à recevoir successivement lesdits bacs de stockage (1, 101) et une zone d'empilage (3 ;103) apte à recevoir lesdits objets plats (200) empilés sur chant selon la direction d'empilage (F) avant chargement/après déchargement, **caractérisé en ce qu'**il comporte au moins un actionneur fixe (4 ;104) et un actionneur mobile (5 ;105), destinés simultanément l'un à être en regard de ladite fenêtre (306), l'autre à recevoir l'appui dudit bac de stockage (300), et déplaçables l'un par rapport à l'autre entre :
- une position d'attente dans laquelle ledit actionneur fixe (4) ou mobile (105) en regard de ladite fenêtre (306) est en retrait dudit actionneur mobile (5) ou fixe (104) de sorte que ledit bac de stockage (300) puisse reposer respectivement sur ledit actionneur mobile (5) ou fixe (104) sans que respectivement ledit actionneur fixe (4) ou mobile (105) ne soit en contact avec lesdits objets plats (200),
- une position de déchargement dans laquelle respectivement ledit actionneur mobile (5) ou fixe (104) est en retrait dudit actionneur fixe (4) ou mobile (105) de sorte que ledit actionneur fixe (4) ou mobile (105) puisse traverser ladite fenêtre (306) en portant lesdits objets plats (200) à charger/décharger jusqu'à affleurer ladite zone d'empilage (3 ;103) sans que ledit bac de stockage (300) ne soit interposé entre lesdits objets plats (200) et ladite zone d'empilage (3 ;103).

2. Dispositif de chargement/déchargement automatique (1, 101) selon la revendication 1, **caractérisé en ce qu'**il comporte des moyens de réglage (8, 83, 84, 9) agencés pour adapter la longueur de ladite zone d'empilage (3 ; 103), selon ladite direction d'empilage (F), entre une longueur maximale et une longueur minimale correspondant à la longueur de la pile d'objets plats (200) qu'elle reçoit.

3. Dispositif de chargement/déchargement automatique (1, 101) selon la revendication précédente, **caractérisé en ce qu'**il comporte au moins une navette (8) portant lesdits actionneurs fixe (4 ; 104) et mobile (5 ;105) et définissant ladite zone d'accueil (2 ; 102), ladite navette (8) étant mobile selon ladite direction d'empilage (F), de sorte que ladite zone d'accueil (2 ; 102) reste adjacente à ladite zone d'empilage (3 ; 103) quelle que soit la longueur de ladite zone d'empilage (3 ; 103), ladite navette (8) étant ainsi mobile entre une position amont correspondant à ladite zone d'empilage (3 ; 103) présentant une longueur maximale et une position aval correspondant à ladite zone d'empilage (3 ; 103) présentant une longueur minimale.

4. Dispositif de chargement/déchargement automatique (1 ; 101) selon la revendication précédente, **caractérisé en ce qu'**il comporte au moins une courroie principale (9) de type sans fin, guidée par des poulies dont au moins une poulie intermédiaire haute (83) et une poulie intermédiaire basse (84) portées par ladite navette (8) et une poulie aval haute (402), une poulie aval basse (403) et une poulie amont (404) fixes prévues de part et d'autres de ladite navette (8), le brin utile (90) de ladite courroie (9) s'étendant entre ladite poulie intermédiaire haute (83) et ladite poulie aval haute (402) définissant ladite zone d'empilage (3 ; 103), et **en ce que** la translation de ladite navette (8) provoque simultanément la variation de longueur de ladite zone d'empilage (3 ; 103) et le maintien de ladite zone d'accueil (2 ; 102) adjacente à ladite zone d'empilage (3 ; 103).

5. Dispositif de chargement/déchargement automatique (1) selon la revendication précédente, **caractérisé en ce qu'**entre ladite poulie amont (404) et ladite poulie intermédiaire basse (84), ladite courroie principale (9) définit un brin opposé (91) sensiblement parallèle audit brin utile (90) de sorte que la variation de longueur de la zone d'empilage (3 ; 103) lors du déplacement de ladite navette (8) n'impacte pas la longueur totale de ladite courroie principale (9).

6. Dispositif de chargement/déchargement automatique (1 ; 101) selon la revendication 4, **caractérisé en ce qu'**il comporte une sole rigide (10) coulissante prévue sous ledit brin utile (90) de ladite courroie principale (9) et agencée pour rigidifier ledit brin utile (90), ladite sole rigide (10) étant agencée pour être coulissante et asservie à ladite navette (8) de sorte à suivre la variation de longueur de ladite zone d'empilage (3 ; 103).

7. Dispositif de chargement/déchargement automatique (1 ; 101) selon la revendication 1, **caractérisé en ce qu'**il comporte au moins une palette (7), mobile entre au moins une position d'accueil haute dans laquelle elle est au-dessus de ladite zone d'accueil (2 ; 102), une position d'accueil basse amont prévue sous ladite position d'accueil haute et dans laquelle elle est destinée à être reçue dans ledit bac de stockage (200) à l'arrière de l'objet plat le plus éloigné de ladite zone d'empilage (3 ; 103), une position d'empilage décalée vers l'aval de ladite position d'accueil basse et dans laquelle elle est destinée à retenir l'extrémité amont de ladite pile d'objets plats (200) à dépiler/dépilés.

8. Dispositif de chargement/déchargement automatique (1 ; 101) selon la revendication 7, **caractérisé en ce que** ladite palette (7) est couplée à des moyens de calage agencés pour déplacer ladite palette (7) de sa position d'accueil basse amont vers une position d'accueil basse aval de sorte à tasser lesdits objets plats (200) contenus dans le bac de stockage (300) selon ladite direction d'empilage (F) et selon une valeur de pression prédéterminée.

9. Dispositif de chargement/déchargement automatique (1 ; 101) selon la revendication 7, **caractérisé en ce que** ladite palette (7) est couplée à des moyens d'orientation aptes à modifier l'inclinaison de ladite palette (7) entre une position verticale dans laquelle elle est sensiblement perpendiculaire à ladite direction d'empilage (F) et apte à être insérée dans ledit bac de stockage (300), et une position inclinée dans laquelle sa partie basse est en aval de sa partie haute par rapport à ladite direction d'empilage (F) de sorte à pouvoir retenir une pile d'objet plats (200).

10. Machine de tri (400) d'objets plats (200) comportant au moins un dépileur, des moyens de convoyage et des sorties de tri dans lesquelles lesdits objets plats sont destinés à être répartis selon un plan de tri prédéterminé, **caractérisé en ce qu'**elle comporte au moins un dispositif de chargement/déchargement (1 ; 101) selon l'une quelconque des revendications précédentes prévu respectivement en amont dudit dépileur ou en aval d'au moins une desdites sorties de tri.

11. Procédé de déchargement automatique d'objets plats (200) empilés sur chant dans/hors de bacs de stockage (300) pourvus chacun d'une plaque de fond (301) recevant le chant desdits objets plats (200) et traversée par au moins une fenêtre (306), **caractérisé en ce qu'**il comporte au moins :
- une étape d'alimentation au cours de laquelle on place au moins un bac de stockage (300) contenant des objets plats (200) empilés sur chant, sur une zone d'accueil (2 ; 102) au niveau de laquelle il est supporté par au moins un actionneur fixe (4 ; 104), mobile (5 ; 105), et ladite fenêtre (306) est en regard respectivement dudit actionneur mobile (5 ; 105), fixe (4 ; 104),
- une étape d'extraction au cours de laquelle on déplace lesdits actionneurs mobile (5 ; 105), et fixe (4 ; 104) l'un par rapport à l'autre dans un premier sens (S1) de sorte que respectivement ledit actionneur mobile (5 ; 105), fixe (4 ; 104) traverse ladite fenêtre (306) afin que le chant desdits objets plats soit en appui sur l'extrémité dudit actionneur mobile (5 ; 105), fixe (4 ; 104) et éloigné progressivement de ladite plaque de fond (301) jusqu'à ce qu'à être au-dessus des panneaux externes (302A, 302B) dudit bac de stockage (300) et affleurer une zone d'empilage (3 ; 103) apte à recevoir lesdits objets plats (200) après déchargement,
- une étape de transfert au cours de laquelle, on déplace lesdits objets plats (200) selon ladite direction d'empilage (F), de l'extrémité dudit actionneur mobile (5 ; 105), fixe (4 ; 104) vers ladite zone d'empilage (3 ; 103) au niveau de laquelle on accumule lesdits objets plats (200) déchargés sous la forme d'une pile,
- une étape de libération dudit bac de stockage (300) au cours de laquelle on déplace lesdits actionneurs mobile (5 ; 105), et fixe (4 ; 104) l'un par rapport à l'autre dans un second sens (S2) opposé audit premier sens(S1) de sorte que ladite fenêtre (306) soit libérée du passage respectivement dudit actionneur mobile (5 ; 105), fixe (4 ; 104) et que ledit bac de stockage (300) puisse être retirée de ladite zone d'accueil (2 ; 102).

12. Procédé de déchargement automatique selon la revendication précédente, **caractérisé en ce qu'**avant ladite étape d'extraction, on réalise une étape de réglage au cours de laquelle on ajuste selon ladite direction d'empilage (F) la longueur de ladite zone d'empilage (3) en fonction de la longueur de la pile d'objets plats (200) qu'elle porte et une étape d'approche au cours de laquelle on déplace ledit bac de stockage (300) selon ladite direction d'empilage (F) vers l'aval de sorte qu'il soit tangent à ladite zone d'empilage (3) quelle que soit la longueur de ladite zone d'empilage (3).

13. Procédé de déchargement automatique selon la revendication précédente, **caractérisé en ce que** l'on réalise ladite étape de réglage et ladite étape d'approche simultanément.

14. Procédé de déchargement automatique selon la revendication précédente, **caractérisé en ce qu'**avant ladite étape d'extraction, on réalise une étape de calage au cours de laquelle on comprime vers l'aval et selon ladite direction d'empilage (F), la pile d'objets plats (200) contenus dans ledit bac de stockage (300), **en ce que** l'on contrôle la résistance opposée à ladite compression et que, lorsque ladite résistance atteint un seuil prédéterminé, on relâche ladite pression à un niveau inférieur audit seuil prédéterminé de sorte à autoriser un éventuel rélargissement de ladite pile comprimée, puis on maintient ladite pression à une valeur de pression prédéterminée sous ledit seuil.

15. Procédé de tri postal au cours duquel on réalise au moins des étapes de déchargement d'objets plats empilés sur chant d'un bac de stockage, de dépilage desdits objets plats, de tri desdits objets plats, d'empilage desdits objets plats, et de chargement desdits objets plats dans au moins un bac de stockage, **caractérisé en ce que** l'on réalise lesdites étapes de déchargement selon ledit procédé de déchargement des revendications 11 à 14 en utilisant un bac de stockage (300) d'un type prédéterminé dont la plaque de fond (301) est traversée par au moins une fenêtre (306), et **en ce que**, lors dudit chargement, on utilise un bac de stockage (300) du même type prédéterminé de sorte à n'utiliser qu'un seul type de bac de stockage (300) au cours dudit procédé de tri postal.

## Patentansprüche

1. Automatische Be-/Entladevorrichtung (1, 101) von auf der Kante innerhalb/außerhalb von Lagerbehältnissen (300) gestapelten flachen Gegenständen (200), welche Lagerbehältnisse jeweils mit einer Bodenplatte (301) ausgestattet sind, die die Kante der flachen Gegenstände (200) aufnimmt und die von wenigstens einem Fenster (306) durchsetzt ist, wobei die Be-/Entladevorrichtung (1, 101) wenigstens eine Empfangszone (2; 102), die sukzessive die Lagerbehältnisse (1, 101) aufnehmen kann, und eine Stapelzone (3; 103), die die auf der Kante gestapelten flachen Gegenstände (200) gemäß der Stapelrichtung (F) vor/nach dem Be-/ Entladen aufnehmen kann, aufweist
**dadurch gekennzeichnet,**
**dass** sie wenigstens einen stationären Aktuator (4; 104) und einen beweglichen Aktuator (5; 105) umfasst, die dazu bestimmt sind, simultan der eine gegenüber des Fensters (306) zu sein und der andere das Lagerbehältnis (300) abzustützen, und die der eine in Bezug auf den anderen verlagerbar sind zwischen:
- einer Warteposition, in der der dem Fenster (306) gegenüberliegende stationäre (4) oder bewegliche (105) Aktuator gegenüber dem beweglichen (5) oder stationären (104) Aktuator derart zurückgezogen ist, dass das Lagerbehältnis (300) jeweils auf dem beweglichen (5) oder stationären (104) Aktuator ruhen kann, ohne dass jeweils der stationäre (4) oder bewegliche (105) Aktuator mit den flachen Gegenständen (200) in Kontakt ist,
- eine Entladeposition, in der jeweils der bewegliche (5) oder stationäre (104) Aktuator gegenüber dem stationären (4) oder beweglichen (105) Aktuator derart zurückgezogen ist, dass der stationäre (4) oder bewegliche (105) Aktuator das Fenster (306) unter Tragen der zu be-/entladenden flachen Gegenstände (200) durchsetzen kann bis zum Berühren der Stapelzone (3; 103), ohne dass das Lagerbehältnis (300) zwischen den flachen Gegenständen (200) und der Stapelzone (3; 103) vorsteht.

2. Automatische Be-/Entladevorrichtung (1, 101) nach Anspruch 1, **dadurch gekennzeichnet, dass** sie Einstellmittel (8, 83, 84, 9) aufweist, die ausgebildet sind, um die Länge der Stapelzone (3; 103) gemäß der Stapelrichtung (F) zwischen einer maximalen Länge und einer minimalen Länge anzupassen, die der Länge des von ihr aufzunehmenden Stapels flacher Gegenstände (200) entspricht.

3. Automatische Be-/Entladevorrichtung (1, 101) nach dem vorhergehenden Anspruch, **dadurch gekennzeichnet, dass** sie wenigstens ein Pendelglied (8) umfasst, das die stationären (4; 104) und beweglichen Aktuatoren (5; 105) trägt und das die Empfangszone (2; 102) definiert, wobei das Pendelglied (8) beweglich gemäß der Stapelrichtung (F) ist derart, dass die Empfangszone (2; 102) benachbart zu der Stapelzone (3; 103) bleibt, unabhängig davon, wie die Länge der Stapelzone (3; 103) ist, wobei das Pendelglied (8) hierbei beweglich ist zwischen einer stromaufwärtigen Position, die der Stapelzone (3; 103) mit maximaler Länge entspricht, und einer stromabwärtigen Position, die der Stapelzone (3; 103) mit minimaler Länge entspricht.

4. Automatische Be-/Entladevorrichtung (1, 101) nach dem vorhergehenden Anspruch, **dadurch gekennzeichnet, dass** sie wenigstens ein Hauptband (9) vom endlosen Typ, das von Rollen geführt ist, von denen wenigstens eine oben angeordnete intermediäre Rolle (83) und eine unten angeordnete intermediäre Rolle (84) von dem Pendelglied (8) getragen sind und jeweils stationär eine oben angeordnete stromabwärtige Rolle (402), eine unten angeordnete stromabwärtige Rolle (403) und eine stromaufwärtige Rolle (404), die einerseits und andererseits des Pendelglieds (8) vorgesehen sind, aufweist, wobei der Nutztrum (90) des Bandes (9) sich zwischen der oben angeordneten intermediären Rolle (83) und der oben angeordneten stromabwärtigen Rolle (402) erstreckt und die Stapelzone (3; 103) definiert, und dass die Verlagerung des Pendelglieds (8) gleichzeitig die Veränderung der Länge der Stapelzone (3; 103) und das Beibehalten der zu der Stapelzone (3; 103) benachbarten Empfangszone (2; 102) bewirkt.

5. Automatische Be-/Entladevorrichtung (1) nach dem vorhergehenden Anspruch, **dadurch gekennzeichnet, dass** zwischen der stromaufwärtigen Rolle (404) und der unten angeordneten intermediären Rolle (84) das Hauptband (9) einen Gegentrum (91) definiert, der im Wesentlichen parallel zu dem Nutztrum (90) ist, derart, dass die Veränderung der Länge der Stapelzone (3; 103) bei der Verlagerung des Pendelglieds (8) sich nicht auf die Gesamtlänge des Hauptbandes (9) auswirkt.

6. Automatische Be-/Entladevorrichtung (1; 101) nach Anspruch 4, **dadurch gekennzeichnet, dass** sie eine verschiebbare steife Sohle (10) umfasst, die unter dem Nutztrum (90) des Hauptbandes (9) vorgesehen ist und zum Versteifen des Nutztrums (90) ausgebildet ist, wobei die steife Sohle (10) ausgebildet ist, um verschiebbar und dem Pendelglied (8) untergeordnet zu sein, derart, dass sie der Veränderung der Länge der Stapelzone (3; 103) folgt.

7. Automatische Be-/Entladevorrichtung (1; 101) nach Anspruch 1, **dadurch gekennzeichnet, dass** sie wenigstens eine Palette (7) umfasst, die beweglich ist zwischen wenigstens einer oberen Empfangsposition, in welcher sie oberhalb der Empfangszone (2; 102) ist, einer unteren stromaufwärtigen Empfangsposition, die unter der oberen Empfangsposition vorgesehen ist und in welcher sie dazu bestimmt ist, in dem Lagerbehältnis (200) hinter dem am weitesten von der Stapelzone (3; 103) entfernten flachen Gegenstand aufgenommen zu werden, einer stromabwärts der unteren stromaufwärtigen Empfangsposition versetzte Stapelposition, in welcher sie dazu bestimmt ist, das stromaufwärtige Ende des abzustapelnden/abgestapelten Stapels flacher Gegenstände (200) festzuhalten.

8. Automatische Be-/Entladevorrichtung (1; 101) nach Anspruch 7, **dadurch gekennzeichnet, dass** die Palette (7) mit Stützmitteln gekoppelt ist, die ausgebildet sind, um die Palette (7) aus ihrer stromaufwärtigen unteren Empfangsposition zu einer stromabwärtigen unteren Empfangsposition derart zu verlagern, dass die in dem Lagerbehältnis (300) enthaltenen flachen Gegenstände (200) gemäß der Stapelrichtung (F) und gemäß eines vorbestimmten Presswertes zusammengepresst werden.

9. Automatische Be-/Entladevorrichtung (1; 101) nach Anspruch 7, **dadurch gekennzeichnet, dass** die Palette (7) mit Neigungsmitteln gekoppelt ist, die in der Lage sind, die Neigung der Palette (7) zwischen einer vertikalen Position, in der sie im Wesentlichen senkrecht zu der Stapelrichtung (F) ist und in das Lagerbehältnis (300) eingesetzt werden kann, und einer geneigten Position, in der ihr unterer Teil stromabwärts ihres oberen Teils in Bezug auf die Stapelrichtung (F) ist derart, dass sie einen Stapel flacher Gegenstände (200) halten kann, zu verändern.

10. Sortiermaschine (400) für flache Gegenstände (200), umfassend wenigstens einen Abstapler, Fördermittel und Sortierausgänge, in denen die flachen Gegenstände dazu bestimmt sind, gemäß eines vorbestimmten Sortierplans verteilt zu werden, **dadurch gekennzeichnet, dass** sie wenigstens eine Be-/Entladevorrichtung (1; 101) nach einem der vorhergehenden Ansprüche umfasst, die jeweils stromaufwärts des Abstaplers oder stromabwärts wenigstens eines der Sortierausgänge vorgesehen ist.

11. Verfahren zum automatischen Entladen von auf der Kante innerhalb/außerhalb von Lagerbehältnissen (300) gestapelter flacher Gegenstände (200), welche Lagerbehältnisse jeweils eine Bodenplatte (301) aufweisen, die die Kante der flachen Gegenstände (200) aufnimmt und die von wenigstens einem Fenster (306) durchsetzt ist,
**dadurch gekennzeichnet, dass** sie wenigstens umfasst:
- einen Versorgungsschritt, während dem wenigstens ein auf der Kante gestapelte flache Gegenstände (200) enthaltendes Lagerbehältnis (300) auf einer Empfangszone (2; 102) platziert wird, auf deren Höhe es durch wenigstens einen stationären (4; 104) bzw. beweglichen (5; 105) Aktuator abgestützt ist, und das Fenster (306) jeweils gegenüber des beweglichen (5; 105) bzw. stationären (4; 104) Aktuators ist,
- einen Extraktionsschritt, während dem die beweglichen (5; 105) bzw. stationären (4; 104) Aktuatoren der eine in Bezug auf den anderen in eine erste Richtung (S1) derart verlagert werden, dass jeweils der bewegliche (5; 105) bzw. stationäre (4; 104) Aktuator das Fenster (306) durchsetzt, um die Kante der flachen Gegenstände auf dem Ende des beweglichen (5; 105) bzw. stationären (4; 104) Aktuators abzustützen und zunehmend von der Bodenplatte (301) zu entfernen, bis sie oberhalb der Außenplatten (302A, 302B) des Lagerbehältnisses (300) ist und eine Stapelzone (3; 103) streift, die in der Lage ist, die flachen Gegenstände (200) nach dem Entladen zu empfangen,
- einen Transferschritt, während dem die flachen Gegenstände (200) gemäß der Stapelrichtung (F) von dem Ende des beweglichen (5; 105) bzw. stationären (4; 104) Aktuators zu der Stapelzone (3; 103) verlagert werden, auf deren Höhe die abgeladenen flachen Gegenstände (200) in Form eines Stapels gesammelt werden,
- einen Freigabeschritt des Lagerbehältnisses (300), während dem die beweglichen (5; 105) bzw. stationären (4; 104) Aktuatoren der eine in Bezug auf den anderen in eine der ersten Richtung (S1) entgegengesetzten zweite Richtung (S2) verlagert werden, derart, dass das Fenster (306) von dem Durchtritt des beweglichen (5; 105) bzw. stationären (4; 104) Aktuators befreit ist und das Lagerbehältnis (300) von der Empfangszone (2; 102) zurückgezogen werden kann.

12. Verfahren zum automatischen Entladen nach dem vorhergehenden Anspruch, **dadurch gekennzeichnet, dass** vor dem Extraktionsschritt ein Einstellschritt, während dem gemäß der Stapelrichtung (F) die Länge der Stapelzone (3) in Funktion der Länge des von ihr getragenen Stapels flacher Gegenstände (200) angepasst wird, und ein Annäherungsschritt, während dem das Lagerbehältnis (300) gemäß der Stapelrichtung (F) stromabwärts verlagert wird, derart, dass es unabhängig von der Länge der Stapelzone (3) benachbart zu der Stapelzone (3) ist, ausgeführt wird.

13. Verfahren zum automatischen Entladen nach dem vorhergehenden Anspruch, **dadurch gekennzeichnet, dass** der Einstellschritt und der Annäherungsschritt simultan ausgeführt werden.

14. Verfahren zum automatischen Entladen nach dem vorhergehenden Anspruch, **dadurch gekennzeichnet, dass** vor dem Extraktionsschritt ein Stützschritt ausgeführt wird, während dem der in dem Lagerbehältnis (300) enthaltene Stapel flacher Gegenstände (200) stromabwärts und gemäß der Stapelrichtung (F) komprimiert wird, und dass der dem Zusammendrücken entgegengesetzte Widerstand gemessen wird und wenn der Widerstand einen vorbestimmten Schwellenwert erreicht, der Druck auf ein niedrigeres Niveau als der Schwellenwert herabgesetzt wird, um ein eventuelles Verbreitern des zusammengedrückten Stapels zu erlauben, und anschließend der Druck bei einem vorbestimmten Druckwert unter dem Schwellenwert beibehalten wird.

15. Postalisches Sortierverfahren, bei dem wenigstens die Schritte Entladen von in einem Lagerbehältnis auf Kante gestapelter flacher Gegenstände, Abstapeln der flachen Gegenstände, Sortieren der flachen Gegenstände, Stapeln der flachen Gegenstände, Beladen der flachen Gegenstände in wenigstens ein Sortierbehältnis ausgeführt werden, **dadurch gekennzeichnet, dass** der Entladen-Schritt gemäß dem Verfahren zum Entladen nach den Ansprüchen 11 bis 14 ausgeführt wird unter Verwendung eines Lagerbehältnisses (300) eines vorbestimmten Typs, dessen Bodenplatte (301) von wenigstens einem Fenster (306) durchsetzt ist, und dass bei dem Beladen ein Lagerbehältnis (300) desselben vorbestimmten Typs verwendet wird, um nur einen einzigen Typ von Lagerbehältnissen (300) während des postalischen Sortierverfahrens zu verwenden.

## Claims

1. Automatic loading/unloading apparatus (1, 101) for automatically loading flat articles (200) stacked on edge into storage trays (300) and for automatically unloading flat articles (200) stacked on edge therefrom, each of said storage trays (300) having a bottom plate (301) receiving the edges of said flat articles (200) and provided with at least one through window (306), said automatic loading/unloading apparatus (1, 101) having at least one tray-receiving zone (2, 102) suitable for receiving said trays successively and one stacking zone (3; 103) suitable for receiving said flat articles (200) stacked on edge in the stacking direction (F) before loading/after unloading, said automatic loading/unloading apparatus being **characterized in that** it has at least one stationary actuator (4; 104) and one moving actuator (5, 105), which actuators are designed so that, simultaneously, one of them is in register with said window (306) and the other of them receives said storage tray (300) bearing against it, and so that said actuators are movable relative to each other between:
• a waiting position in which said stationary actuator (4) or said moving actuator (105) that is in register with said window (306) is set back from said moving actuator (5) or from said stationary actuator (104) so that said storage tray (300) can rest respectively on said moving actuator (5) or on said stationary actuator (104) without respectively said stationary actuator (4) or said moving actuator (105) being in contact with said flat articles (200); and
• an unloading position in which respectively said moving actuator (5) or said stationary actuator (104) is set back from said stationary actuator (4) or from said moving actuator (105) so that said stationary actuator (4) or said moving actuator (105) can pass through said window (306) while carrying said flat articles (200) to be loaded/unloaded until it comes flush with said stacking zone (3; 103) without said storage tray (300) being interposed between said flat articles (200) and said stacking zone (3; 103).

2. Automatic loading/unloading apparatus (1, 101) according to claim 1, **characterized in that** it has adjustment means (8, 83, 84, 9) arranged to adapt the length of said stacking zone (3; 103), in said stacking direction (F), between a maximum length and a minimum length corresponding to the length of the stack of flat articles (200) that it receives.

3. Automatic loading/unloading apparatus (1, 101) according to the preceding claim, **characterized in that** it has at least one shuttle (8) carrying said stationary actuator (4; 104) and said moving actuator (5; 105) and defining said tray-receiving zone (2; 102), said shuttle (8) being mounted to move in said stacking direction (F), so that said tray-receiving zone (2; 102) remains adjacent to said stacking zone (3; 103) regardless of the length of said stacking zone (3; 103), said shuttle (8) thus being mounted to move between an upstream position corresponding to said stacking zone (3; 103) having a maximum length and a downstream position corresponding to said stacking zone (3; 103) having a minimum length.

4. Automatic loading/unloading apparatus (1; 101) according to the preceding claim, **characterized in that** it has at least one main belt (9) of the endless type, guided by pulleys including at least one high intermediate pulley (83) and at least one low intermediate pulley (84) that are carried by said shuttle (8), and a high downstream pulley (402), a low downstream pulley (403), and an upstream pulley (404) that are carried in stationary manner and that are provided on either side of said shuttle (8), the working run (90) of said belt (9) extending between said high intermediate pulley (83) and said high downstream pulley (402) and defining said stacking zone (3; 103), and **in that** said shuttle (8) moving in translation simultaneously causes the length of said stacking zone (3; 103) to vary, and causes said tray-receiving zone (2; 102) to be kept adjacent to said stacking zone (3; 103).

5. Automatic loading/unloading apparatus (1) according to the preceding claim, **characterized in that**, between said upstream pulley (404) and said low intermediate pulley (84), said main belt (9) defines an opposite run (91) that is substantially parallel to said working run (90) so that the variation in the length of the stacking zone (3; 103) while said shuttle (8) is moving does not have any impact on the total length of said main belt (9).

6. Automatic loading/unloading apparatus (1; 101) according to claim 4, **characterized in that** it has a slidably mounted rigid bed (10) provided under said working run (90) of said main belt (9) and arranged to stiffen said working run (90), said rigid bed (10) being arranged to be slidably mounted and to be servo-controlled to said shuttle (8) in such a manner as to follow the variation in the length of said stacking zone (3; 103).

7. Automatic loading/unloading apparatus (1; 101) according to claim 1, **characterized in that** it has at least one paddle (7) mounted to move between at least one high reception position in which it is above said tray-receiving zone (2; 102), an upstream low reception position provided under said high reception position and in which it is designed to be received in said storage tray (200) behind the flat article that is furthest from said stacking zone (3; 103), a stacking position offset downstream from said low reception position and in which it is designed to retain the upstream end of said stack of flat articles (200) that are to be unstacked/that have been unstacked.

8. Automatic loading/unloading apparatus (1; 101) according to claim 7, **characterized in that** said paddle (7) is coupled to settling means arranged to move said paddle (7) from its upstream low reception position towards a downstream low reception position so as to tamp said flat articles (200) contained in the storage tray (300) in said stacking direction (F) and with a predetermined pressure value.

9. Automatic loading/unloading apparatus (1; 101) according to claim 7, **characterized in that** said paddle (7) is coupled to steering means that are suitable for modifying the inclination of said paddle (7) between a vertical position in which it is substantially perpendicular to said stacking direction (F) and suitable for being inserted in said storage tray (300), and an inclined position in which its low portion is downstream from its high portion relative to said stacking direction (F) so that it can retain a stack of flat articles (200).

10. A sorting machine (400) for sorting flat articles (200), the sorting machine including at least one unstacker, conveyor means, and sorting outlets into which said flat articles are to be distributed in compliance with a predetermined sorting plan, said sorting machine being **characterized in that** it includes at least one automatic loading/unloading apparatus (1; 101) according to any preceding claim and provided respectively upstream from said unstacker and downstream from at least one of said sorting outlets.

11. A method of automatically unloading flat articles (200) stacked on edge into/from storage trays (300), each of which has a bottom plate (301) receiving the edges of said flat articles (200) and provided with at least one through window (306), said method being **characterized in that** it comprises at least:
• a feed step during which at least one storage tray (300) containing flat articles (200) stacked on edge is placed in a tray-receiving zone (2; 102) at which it is supported by at least one actuator that is a stationary actuator (4; 104) or a moving actuator (5; 105), and said window (306) is in register respectively with said moving actuator (5; 105) or with said stationary actuator (4; 104);
• an extraction step during which said moving and stationary actuators (5; 105; 4; 104) are moved relative to each other in a first direction (S1) so that respectively said moving actuator (5; 105) or said stationary actuator (4; 104) passes through said window (306) so that the edges of said flat articles bear against the end of said moving actuator (5; 105) or of said stationary actuator (4; 104) and move gradually away from the bottom plate (301) until they are above the outer panels (302A, 302B) of said storage tray (300) and come flush with a stacking zone (3; 103) suitable for receiving said flat articles (200) after unloading;
• a transfer step during which said flat articles (200) are moved in said stacking direction (F), from the end of said moving actuator (5; 105) or of said stationary actuator (4; 104) towards said stacking zone (3; 103) at which said flat articles (200) as unloaded in the form of stack are accumulated; and
• a release step for releasing said storage tray (300) and during which said moving and stationary actuators (5; 105; 4; 104) are moved relative to each other in a second direction (S2) opposite from said first direction (S1) so that said window (306) is released from the passing respectively of said moving actuator (5; 105) or of said stationary actuator (4; 104), and so that said storage tray (300) can be removed from said tray-receiving zone (2; 102).

12. An automatic unloading method according to the preceding claim, **characterized in that**, prior to said extraction step, an adjustment step is performed during which the length of said stacking zone (3) is adjusted in said stacking direction (F) as a function of the length of the stack of flat articles (200) that it is carrying, and an approach step during which said storage tray (300) is moved in said stacking direction (F) downstream so that it is tangential to said stacking zone (3) regardless of the length of said stacking zone (3).

13. An automatic unloading method according to the preceding claim, **characterized in that** said adjustment step and said approach step are performed simultaneously.

14. An automatic unloading method according to any preceding claim, **characterized in that**, prior to said extraction step, a settling step is performed during which the stack of flat articles (200) contained in said storage tray (300) is compressed downstream and in said stacking direction (F), **in that** the resistance exerted against said compression is monitored, and **in that**, when said resistance reaches a predetermined threshold, said pressure is released to a level less than said predetermined threshold so as to allow a possible re-enlargement of said compressed stack, and then said pressure is maintained at a predetermined pressure value below said threshold.

15. A postal sorting method during which at least one of the following steps is performed: unloading flat articles stacked on edge from a storage tray; unstacking said flat articles, sorting said flat articles, stacking said flat articles, and loading said flat articles into at least one storage tray; said postal sorting method being **characterized in that** said unloading steps are performed as in said unloading method of claims 11 to 14 by using a storage tray (300) of a predetermined type having its bottom wall (301) provided with at least one through window (306), and **in that**, during said loading, a storage tray (300) of the same predetermined type is used so as to use only one type of storage tray (300) during said postal sorting method.
